# EUROPEAN PATENT APPLICATION

(11) **EP 4 718 488 A1**
(43) Date of publication of application: **01.04.2026**
(21) Application number: 24811168.4
(22) Date of filing: 23.05.2024
(51) Int. Cl.: H01G 13/00, H01G 9/008

(54) **METHOD FOR MANUFACTURING LEAD TERMINAL FOR POWER STORAGE DEVICE, AND LEAD TERMINAL FOR POWER STORAGE DEVICE**

(30) Priority: 23.05.2023 JP 2023084886
(71) Applicant: Kohoku Kogyo Co., Ltd., Nagahama-shi, Shiga 529-0241 (JP)
(72) Inventor: ARAKI, Haruhito, Nagahama-shi, Shiga 529-0241 (JP); NISHIMIYA, Shuei, Nagahama-shi, Shiga 529-0241 (JP); NAKAMURA, Takeshi, Nagahama-shi, Shiga 529-0241 (JP); SHIBATA, Manabu, Nagahama-shi, Shiga 529-0241 (JP)
(74) Representative: J A Kemp LLP
(86) International application number: PCT/JP2024/018946
(87) International publication number: WO 2024/242162

(57) **Abstract**

Provided is a method of manufacturing a lead terminal for a power storage device, the lead terminal including: an electrode terminal (2) formed of a wire material (100) mainly containing aluminum or copper; and a lead wire (3) connected to the electrode terminal through intermediation of a welded portion (4), the method including: a first step of aligning the wire material and the lead wire in a straight line, and holding the wire material and the lead wire under a state in which a distance between an end surface (100b) of the wire material on the lead wire side and an end surface (3b) of the lead wire on the wire material side is maintained at a predetermined distance; a second step of applying, by a laser irradiation machine (400), a laser beam to an end portion (100a) of the wire material on the lead wire side to melt the end portion; and a third step of pushing one of the wire material or the lead wire toward another one of the wire material or the lead wire in an axial direction after an elapse of a predetermined time from a time point of start of irradiation with the laser beam in the second step to form the welded portion.

## Description

### Technical Field

The present invention relates to a method of manufacturing a lead terminal for a power storage device, and to a lead terminal for a power storage device.

### Background Art

Hitherto, a lead terminal for a power storage device has been known. Any lead terminal for a power storage device includes an electrode terminal made of metal, and a lead wire. The lead wire is connected to the electrode terminal through intermediation of a welded portion. For example, in a lead terminal for an electrolytic capacitor (one type of power storage device), the electrode terminal is connected to an electrode foil forming a capacitor element (component of the electrolytic capacitor), and the lead wire is connected to an electrical circuit.

As a typical lead terminal, there has been known a lead terminal including an electrode terminal made of aluminum or copper. A welded portion of such a lead terminal has been generally formed by percussion arc welding so far (see, for example, Patent Literature 1). This is because other welding methods have had disadvantages such as there is a fear of mixture of foreign matters when the welded portion is formed by brazing (one type of brazing/soldering), and a melting rate of a material to be welded is relatively low when the welded portion is formed by resistance welding (one type of welding with pressure), and thus percussion arc welding has been able to achieve the highest yield among the welding methods considered at that time.

### Citation List

### Patent Literature

[PTL 1] JP 5461570 B

### Summary of Invention

### Technical Problem

However, it cannot be said that the welding method using percussion arc welding is the best, and there is room for improvement in a method of manufacturing a lead terminal including an electrode terminal made of aluminum or copper, and a lead terminal manufactured by the manufacturing method.

The present invention has been made to cope with the above-mentioned problem. That is, the present invention has an object to provide a manufacturing method of appropriately manufacturing a lead terminal for a power storage device, which includes an electrode terminal formed of a wire material mainly containing aluminum or copper, and a lead terminal manufactured by the manufacturing method.

### Solution to Problem

According to the present invention, there is provided a method of manufacturing a lead terminal for a power storage device, the lead terminal including: an electrode terminal (2) formed of a wire material (100) mainly containing aluminum or copper; and a lead wire (3) connected to the electrode terminal through intermediation of a welded portion (4).

The method of manufacturing a lead terminal includes:
a first step of aligning the wire material (100) and the lead wire (3) in a straight line, and holding the wire material and the lead wire under a state in which a distance between an end surface (100b) of the wire material on the lead wire side and an end surface (3b) of the lead wire on the wire material side is maintained at a predetermined distance;
a second step of applying, by a laser irradiation machine (400), a laser beam to an end portion (100a) of the wire material (100) on the lead wire side to melt the end portion; and
a third step of pushing one of the wire material (100) or the lead wire (3) toward another one of the wire material (100) or the lead wire (3) in an axial direction after an elapse of a predetermined time from a time point of start of irradiation with the laser beam in the second step to form the welded portion (4).

Further, according to the present invention, there is provided a lead terminal (101) for a power storage device, the lead terminal including: an electrode terminal (102) formed of a wire material mainly containing aluminum or copper; and a lead wire (103) connected to the electrode terminal through intermediation of a welded portion (104).

In the lead terminal, a ratio of a diameter of the lead wire to a diameter of the wire material is 83% or more and 100% or less.

### Advantageous Effects of Invention

According to the present invention, it is possible to provide the manufacturing method of appropriately manufacturing the lead terminal for a power storage device, which includes the electrode terminal formed of the wire material mainly containing aluminum or copper, and the lead terminal manufactured by the manufacturing method.

### Brief Description of Drawings

FIG. 1 is a perspective view for illustrating a lead terminal manufactured by a method of manufacturing a lead terminal for a power storage device according to an embodiment of the present invention.
FIG. 2A is an explanatory view (first view) for illustrating the method of manufacturing the lead terminal of FIG. 1.
FIG. 2B is an explanatory view (second view) for illustrating the method of manufacturing the lead terminal of FIG. 1.
FIG. 2C is an explanatory view (third view) for illustrating the method of manufacturing the lead terminal of FIG. 1.
FIG. 2D is an explanatory view (fourth view) for illustrating the method of manufacturing the lead terminal of FIG. 1.
FIG. 3 is an explanatory view for illustrating a dent formed in a welded portion.
FIG. 4 is an explanatory view for illustrating a method of manufacturing a lead terminal for a power storage device according to a first modification example.
FIG. 5A is a partially enlarged view of a defective lead terminal manufactured through use of percussion arc welding.
FIG. 5B is a partially enlarged view of another defective lead terminal manufactured through use of percussion arc welding.
FIG. 5C is a partially enlarged view of still another defective lead terminal manufactured through use of percussion arc welding.
FIG. 6 is a perspective view for illustrating a lead terminal manufactured by a method of manufacturing a lead terminal for a power storage device according to a third modification example.
FIG. 7A is a partially enlarged view of a lead terminal having a wire diameter ratio of 83%.
FIG. 7B is a schematic view of an X-ray image of the lead terminal of FIG. 7A.
FIG. 7C is a schematic view of an EPMA image in a cross section of a sample S having a wire diameter ratio of 83%.
FIG. 8A is a partially enlarged view of a lead terminal which is manufactured through use of percussion arc welding and has a wire diameter ratio of 83%.
FIG. 8B is a schematic view of an X-ray image of the lead terminal of FIG. 8A.
FIG. 8C is a schematic view of an EPMA image in a cross section of a sample Sc having a wire diameter ratio of 83%.

### Description of Embodiments

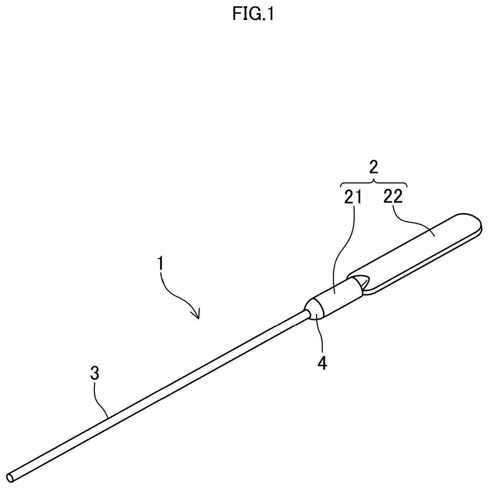

Now, a method of manufacturing a lead terminal for a power storage device according to an embodiment of the present invention is described with reference to the drawings by means of an example of a lead terminal for an electrolytic capacitor that is one type of the power storage device. First, a configuration of the lead terminal is described. As illustrated in FIG. 1, a lead terminal 1 includes an electrode terminal 2 made of aluminum, and a lead wire 3 formed of a CP wire.

The electrode terminal 2 is formed by subjecting a part of a wire material mainly containing aluminum (hereinafter simply referred to as "aluminum wire") in an axial direction to pressing in a radial direction, and includes a rod-shaped portion 21 on one end side and a rolled portion 22 on another end side. The rod-shaped portion 21 is a part remaining without being pressed (that is, another part of the aluminum wire in the axial direction). The rolled portion 22 is formed by pressing the above-mentioned part of the aluminum wire into a flat plate shape, and cutting its outer periphery along a thickness direction. An axis of the rolled portion 22 (line passing through a center in a width direction and the thickness direction) is coaxial with an axis of the rod-shaped portion 21. However, a configuration in which the rolled portion 22 is decentered with respect to the rod-shaped portion 21 may be adopted. This aluminum wire is subjected to well-known anodic oxidation treatment in advance, and an oxide film is formed on its outer peripheral surface. The aluminum wire has a diameter of about 2 mm. The electrode terminal 2 may be formed through use of an aluminum wire that is not subjected to anodic oxidation treatment.

The lead wire 3 is connected to one end of the rod-shaped portion 21 through intermediation of a welded portion 4. The lead wire 3 has a diameter of about 0.8 mm, and is smaller in diameter than the rod-shaped portion 21. An axis of the lead wire 3 is coaxial with the axis of the rod-shaped portion 21. In this embodiment, as the CP wire forming the lead wire 3, a metal wire obtained by covering an outer peripheral surface of an iron wire with a copper plating layer and further covering the copper plating layer with a tin plating layer is used. Each of the copper plating layer and the tin plating layer has a thickness in the order of several tens of micrometers. However, a CP wire covered with, in place of the tin plating layer, a nickel plating layer, a silver plating layer, or a lead-free solder plating layer may be used. As another example, as the CP wire forming the lead wire 3, a metal wire obtained by covering an outer peripheral surface of an iron wire with only a copper plating layer may be used.

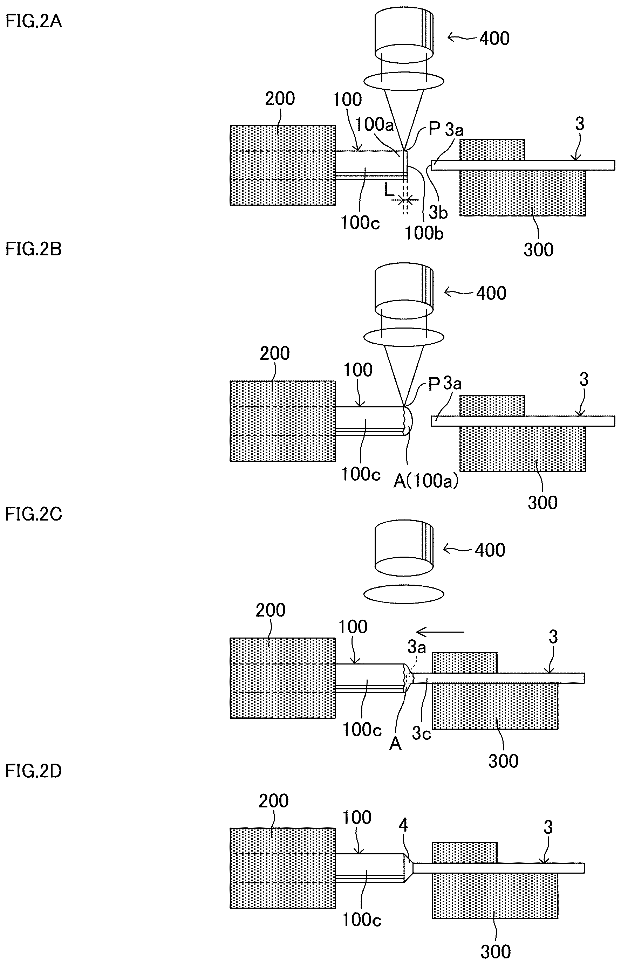

Next, the method of manufacturing the lead terminal 1 is described with reference to FIG. 2A to FIG. 2D. First, an elongated aluminum wire (strictly speaking, an aluminum wire subjected to anodic oxidation treatment) that is a material for the electrode terminal 2 is cut into a predetermined length to form a wire material 100. Further, an elongated CP wire that is a material for the lead wire 3 is cut into a predetermined length to form the lead wire 3.

Subsequently, as illustrated in FIG. 2A, the wire material 100 is held by a jig 200, and the lead wire 3 is held by a jig 300. The wire material 100 and the lead wire 3 are aligned in a straight line so that axes of the wire material 100 and the lead wire 3 become coaxial, and are brought into a state in which a distance between an end surface 100b of one end portion 100a of the wire material 100 and an end surface 3b of another end portion 3a of the lead wire 3 is maintained at a predetermined distance (in this embodiment, 2 mm) (first step).

Next, a laser beam is applied by a laser irradiation machine 400 from a direction orthogonal to the axis of the wire material 100 (hereinafter simply also referred to as "orthogonal direction") to a predetermined position P of the end portion 100a of the wire material 100. The position P is located at a position on an outer peripheral surface 100c of the end portion 100a separated away by a predetermined distance L (in this embodiment, 0.10 mm) from the end surface 100b of the end portion 100a. When the wire material 100 is viewed in plan view from an irradiation direction of the laser beam, the position P is located at the center of the wire material 100 in the radial direction. That is, the laser beam is applied toward the axis of the wire material 100. The irradiation machine 400 is an infrared laser (IR laser) of a single mode having an output of 700 W. The laser beam is applied for 0.030 s at a spot diameter of 30 µm. With a laser beam being applied to the position P of the wire material 100 by the irradiation machine 400, as illustrated in FIG. 2B, the end portion 100a is entirely melted so that a molten pool A is formed (second step). The distance L may be changed as appropriate depending on the output, the spot diameter, the irradiation time, and the like of the irradiation machine 400.

The jig 300 is provided with a pushing mechanism (not shown). The pushing mechanism is configured to be capable of applying an external force in a predetermined direction. In this embodiment, the pushing mechanism applies, to the lead wire 3, an external force of pushing the lead wire 3 toward the wire material 100 in the axial direction immediately after the irradiation with the laser beam by the irradiation machine 400 is ended (in other words, after an elapse of an irradiation time from a time point of start of the irradiation with the laser beam). This external force is applied so that the lead wire 3 is moved at a predetermined speed (in this embodiment, 200 mm/s) by a predetermined distance. As a result, as illustrated in FIG. 2C, the end portion 3a of the lead wire 3 is pushed into the molten pool A of the wire material 100. Then, a part of the molten pool A wets and spreads so as to cover an outer peripheral surface 3c of the end portion 3a of the lead wire 3. After that, when the molten pool A (when the end portion 3a is partially melted, the molten pool A and a molten part of the end portion 3a) is solidified, as illustrated in FIG. 2D, the welded portion 4 in a conical shape (strictly speaking, a substantially circular truncated cone shape that is reduced in diameter from the wire material 100 toward the lead wire 3) is formed between the wire material 100 and the lead wire 3 so that the wire material 100 and the lead wire 3 are connected to each other (third step).

After that, another end side of the wire material 100 is subjected to pressing so that the rolled portion 22 illustrated in FIG. 1 is formed, and well-known anodic oxidation treatment and resin coating treatment are performed as required. Thus, the lead terminal 1 is manufactured. As a result of a strength test, it has been confirmed that the strength of the lead terminal 1 manufactured by laser welding is equivalent to the strength of the lead terminal manufactured by percussion arc welding.

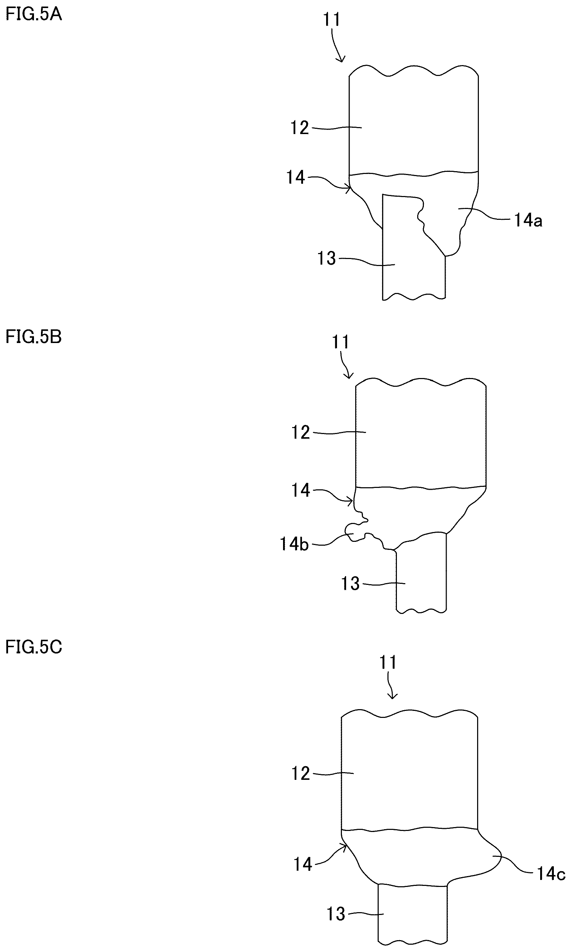

According to the method of manufacturing the lead terminal of this embodiment, as compared to the related-art manufacturing method using percussion arc welding (hereinafter simply also referred to as "arc welding"), the lead terminal can be more appropriately manufactured. Specific description is given below. The related-art welding method using arc welding has had a plurality of problems described below. The first problem is the low reproducibility of the welded portion shape. That is, in arc welding, each workpiece is liable to have a difference in heat input depending on an environmental condition (type and flow rate of a shielding gas, and shape and state of end surfaces of the wire material and the lead wire) at the time of arc generation. As a result, there has been a problem in that the shape of the lead terminal easily varies. FIG. 5Ato FIG. 5C are partial enlarged views of defective products of a lead terminal 11 manufactured through use of arc welding. The lead terminal 11 includes an electrode terminal 12 made of aluminum, and a lead wire 13 formed of a CP wire connected to the electrode terminal 12 through intermediation of a welded portion 14. In FIG. 5A, a part 14a of the welded portion 14 covers an outer peripheral surface of the lead wire 13, but another part of the welded portion 14 does not cover the outer peripheral surface, and the welded portion 14 has an irregular shape (so-called single-sided welding). In FIG. 5B, a protrusion (so-called welding spatter) 14b having a size at a level that can be visually recognized with the naked eye is generated from the welded portion 14. In FIG. 5C, a part 14c of the welded portion 14 in a circumferential direction projects in the radial direction to locally increase the diameter of the welded portion 14 (so-called overflow). The low reproducibility of the welded portion shape exemplified in the lead terminals 11 of FIG. 5Ato FIG. 5C has been a cause to hinder the improvement in yield.

The second problem resides in that a dissimilar metal adheres to a workpiece (in particular, the electrode terminal). That is, in arc welding, an arc is generated between the wire material and the lead wire by arc discharge to melt each of distal end portions of the wire material and the lead wire, and thus spatters are generated from both of the wire material and the lead wire. When the lead wire is, for example, a CP wire covered with a copper plating layer and a tin plating layer, spatters generated from the lead wire contain copper and tin. Accordingly, when the spatters that are generated from the lead wire and contain copper and tin adhere to a wire material made of aluminum, a dissimilar metal adheres to a workpiece (strictly speaking, a part that becomes the electrode terminal after the product is completed). When a capacitor element (component of the electrolytic capacitor) is manufactured through use of the lead terminal having a dissimilar metal adhering to the electrode terminal, the dissimilar metal may react with an electrolytic solution in the capacitor element. In this case, there is a possibility that the quality characteristic is reduced. This problem cannot be avoided as long as the lead wire contains a material other than aluminum. The adhesion of the dissimilar metal to the workpiece has been another cause to hinder the improvement in yield.

The third problem resides in that there is a limit to improvement in the manufacturing speed of the workpiece. That is, in arc welding, an arc is generated by once bringing the wire material and the lead wire into contact with each other and then separating the wire material and the lead wire away from each other, thereby melting the distal end portions of the wire material and the lead wire, and then the wire material and the lead wire are brought into contact with each other again (strictly speaking, one is pushed into another). Accordingly, a plurality of times of reciprocating motions are required for one workpiece, and thus a manufacturing process is complicated. Further, there is a limit to performance of an actuator that can achieve such a series of reciprocating motions, and hence it is difficult to control the actuator at high speed. Those problems have been a cause to hinder an increase in manufacturing speed of the workpiece.

In contrast, in this embodiment, laser welding is adopted as the welding method. Accordingly, the shape of the welded portion 4 can be relatively easily controlled (in other words, after the environmental condition at the time of laser beam irradiation is once determined, adjustment thereafter is basically not required). As a result, the reproducibility of the welded portion shape can be significantly improved. Further, in laser welding, what is irradiated with the laser beam is only the wire material 100, and hence, even when spatters are generated from the wire material 100 by laser welding, a situation in which a dissimilar metal adheres to the electrode terminal 2 does not occur (adhesion of spatters generated from the wire material 100 to the lead wire 3 is not particularly regarded as a problem). In addition, in laser welding, the welded portion 4 is formed by pushing the end portion 3a of the lead wire 3 into the molten pool A of the wire material 100, and hence one workpiece can be subjected to the welding processing by moving the lead wire 3 only once in one direction, and thus the manufacturing process can be simplified. Further, an actuator for achieving such simple movement is easily available, and hence the time required for the operation of the actuator can be greatly reduced by introducing an actuator that operates at high speed. As described above, with the laser welding being adopted as the welding method, the above-mentioned three problems relating to arc welding can be solved, and hence the yield and the manufacturing speed of the lead terminal 1 can be improved.

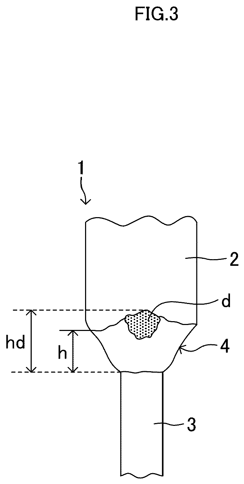

In this case, even when laser welding is used as the welding method, in the following manufacturing method, that is, "a manufacturing method M of pushing one of the wire material 100 or the lead wire 3 toward another one thereof in the axial direction while irradiating the wire material 100 with a laser beam under a state in which the end surface 100b of the wire material 100 and the end surface 3b of the lead wire 3 are brought into abutment against (contact with) each other," the welded portion 4 cannot be appropriately formed in some cases. Specific description is given with reference to FIG. 3. FIG. 3 is a partially enlarged view of the lead terminal 1 at the time when the welded portion 4 is formed by the manufacturing method M. In this example, the laser beam is applied from the orthogonal direction. As illustrated in FIG. 3, the welded portion 4 has a crater-shaped dent "d" formed therein. The dent "d" is a recess formed due to the laser beam continuously applied to one portion on the outer peripheral surface 100c of the wire material 100. It has been found that a height hd of the welded portion 4 in a part in which the dent "d" is formed tends to be larger than a height "h" of the welded portion 4 in a part in which the dent "d" is not formed, and its ratio (hd/h) tends to be from about 1.5 times to about 2 times. Such a welded portion 4 having the dent "d" formed therein is greatly deviated from the general standard of the welded portion 4, and hence becomes a cause to hinder the improvement in yield. Further, when the electrolytic capacitor is manufactured through use of the lead terminal 1 having the dent "d" in the welded portion 4, a gap is generated between a sealing body made of resin and the lead terminal 1, and the electrolytic solution (electrolytic solution held by the capacitor element) may leak from the gap. In this case, there is a possibility that the quality characteristic of the electrolytic capacitor is reduced.

In view of the above, in this embodiment, there is employed a configuration in which irradiation with the laser beam is started under a state in which the distance between the end surface 100b of the wire material 100 and the end surface 3b of the lead wire 3 is maintained at a predetermined distance, and one of the wire material 100 or the lead wire 3 is pushed toward another one thereof in the axial direction after an elapse of a predetermined time T from the time point of start of the irradiation. With this configuration, the dent "d" is less liable to be generated in the welded portion 4, and, as a result, it is possible to improve the yield of the lead terminal 1 and suppress reduction in quality characteristic of the electrolytic capacitor.

As described above, according to the method of manufacturing the lead terminal of this embodiment, it is possible to appropriately manufacture the lead terminal including the electrode terminal formed of the wire material mainly containing aluminum. The lead terminal 1 may be used not only in the electrolytic capacitor but also as a component of other power storage devices. Examples of other power storage devices include a lithium ion capacitor, an electric double layer capacitor (EDLC), and a lithium ion battery. Similar effects are produced even when the lead terminal 1 is used as a component of other power storage devices.

The inventors of the present application have verified a rate of generation of the dent "d" while changing the predetermined time T (time from the time point of start of the irradiation with the laser beam to when the lead wire 3 was pushed toward the wire material 100). As a result, it has been found that, when the laser beam was applied from the orthogonal direction, in the case of 0<T<(irradiation time), the rate of generation of the dent "d" was able to be reduced as compared to the case of T=0, but the rate of generation of the dent "d" was higher than that in the case of T=(irradiation time). Further, in the case of T>(irradiation time), the rate of generation of the dent "d" was able to be suppressed to the same level as that in the case of T=(irradiation time), but the temperature of the molten pool A was reduced by an amount corresponding to delay of the timing to push the lead wire 3 toward the wire material 100, and hence it has been found that there was a possibility that the wire material 100 and the lead wire 3 were not able to be appropriately connected to each other (that is, the strength of the lead terminal 1 was reduced). In view of the above, in this embodiment, when the laser beam is applied from the orthogonal direction, the lead wire 3 is pushed toward the wire material 100 immediately after the end of the irradiation with the laser beam (that is, predetermined time T=irradiation time). With this configuration, the rate of generation of the dent "d" in the welded portion 4 can be further reduced while ensuring the strength of the lead terminal 1.

When the laser beam is applied from the orthogonal direction, the positional adjustment of the irradiation machine 400 is performed by causing an axis of its irradiation port to be orthogonal to the axis of the wire material 100. Accordingly, the positional adjustment of the irradiation machine 400 can be easily performed as compared to a configuration in which the laser beam is applied so as to obliquely intersect the axis of the wire material 100.

Moreover, in this embodiment, an infrared laser is used as the irradiation machine 400. Accordingly, the cost required for the manufacturing equipment of the lead terminal 1 can be reduced as compared to a case in which a short wavelength laser (typically, a blue laser or a green laser) is used as the irradiation machine 400. However, the absorption rate of aluminum is equivalent in all wavelength bands of infrared rays and visible light rays, and hence, from viewpoints other than the manufacturing cost, actions and effects similar to those of this embodiment can be provided even when a short wavelength laser is used. The laser system (for example, fiber laser or semiconductor laser) is not particularly limited.

The laser beam is not limited to be applied to the position P of the wire material 100, and may be applied within a predetermined range on the outer peripheral surface 100c of the end portion 100a in, for example, a linear shape or an oval shape. Further, during irradiation with the laser beam, the wire material 100 may be rotated at a predetermined speed about the axis.

### (First Modification Example)

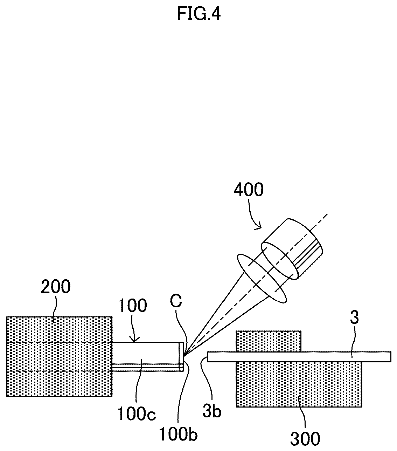

Next, a method of manufacturing a lead terminal for a power storage device according to a first modification example of the present invention is described with reference to FIG. 4. The same components as those of the embodiment are denoted by the same reference symbols, and detailed description thereof is omitted. The same holds true also for other modification examples. As illustrated in FIG. 4, the manufacturing method of the first modification example is different from the manufacturing method of the embodiment in that the irradiation direction of the laser beam is oblique to the axis of the wire material 100. Specifically, in this modification example, the irradiation machine 400 applies the laser beam to a center C of the end surface 100b of the wire material 100 from a direction intersecting the axis of the wire material 100 at 45°. The pushing mechanism applies, to the lead wire 3, an external force of pushing the lead wire 3 toward the wire material 100 in the axial direction immediately after the irradiation with the laser beam is ended (that is, predetermined time T=irradiation time). The spot diameter and the irradiation time may be the same as or different from those of the embodiment.

Even with this configuration, actions and effects similar to those of the embodiment can be produced. In particular, in this modification example, the laser beam is applied not to the outer peripheral surface 100c of the wire material 100 but to the end surface 100b thereof (that is, a part that becomes an inside of the molten pool A). Accordingly, no dent "d" is formed in the welded portion 4. Thus, the yield of the lead terminal 1 can be more suitably improved and the reduction in quality characteristic of the power storage device can be further suppressed.

As long as the laser beam is applied to the end surface 100b of the wire material 100, the irradiation direction of the laser beam is not limited to the direction intersecting the axis of the wire material 100 at 45°. Further, the irradiation position of the laser beam may be decentered from the center C of the end surface 100b, or may be applied within a predetermined range in the end surface 100b into, for example, a linear shape or a circular shape. Moreover, in this modification example, no dent "d" is formed in the welded portion 4, and hence the timing to push the lead wire 3 toward the wire material 100 may be earlier than the time point at which the irradiation with the laser beam is ended (typically, may be earlier by several tens of milliseconds from the time point of the end of the irradiation). That is, the predetermined time T may be set to any value satisfying 0<T≤(irradiation time).

### (Second Modification Example)

Subsequently, a method of manufacturing a lead terminal for a power storage device according to a second modification example of the present invention is described. The manufacturing method of the second modification example is different from the manufacturing methods of the embodiment and the first modification example in that a wire material mainly containing copper is used in place of the aluminum wire as the wire material 100 forming the electrode terminal 2, and in that a short wavelength laser is used in place of the infrared laser as the irradiation machine 400.

This wire material 100 is subjected to well-known anodic oxidation treatment in advance, and an oxide film is formed on its outer peripheral surface. The diameter of the wire material 100 and the method of forming the electrode terminal 2 are similar to those in the embodiment. The electrode terminal 2 may be formed through use of a wire material that is not subjected to anodic oxidation treatment.

The lead terminal 1 may be basically manufactured by the manufacturing method described in the embodiment or the first modification example. However, in the second step, the short wavelength laser is used as the irradiation machine 400. The short wavelength laser is a blue laser of a multi-mode having an output of 2 kW. The laser beam is applied for 70 µs at a spot diameter of 600 µm. With the laser beam being applied to the position P of the wire material 100 by the blue laser, similarly to the embodiment, the end portion 100a is entirely melted so that the molten pool A is formed. A green laser may be used in place of the blue laser as the short wavelength laser. In this case, the spot diameter and the irradiation time may be adjusted as appropriate in accordance with the output of the green laser.

In this case, when the wire material mainly containing copper is used as the wire material 100, no dent "d" is generated even when the predetermined time T (time from the time point of start of the irradiation with the laser beam to when the lead wire 3 is pushed toward the wire material 100) is 0<T<(irradiation time). Accordingly, in this modification example, the predetermined time T is not required to satisfy T=(irradiation time). The predetermined time T may be set as appropriate based on the wire diameter ratio of the lead wire 3 to the wire material 100, the output, the spot diameter, and the irradiation time of the short wavelength laser, and the like.

As described above, according to the method of manufacturing the lead terminal for the power storage device of the second modification example, the three problems relating to the arc welding described in the embodiment can be solved, and the yield and the manufacturing speed of the lead terminal 1 can be improved. That is, the lead terminal 1 including the electrode terminal formed of the wire material mainly containing copper can be appropriately manufactured.

Further, when the lead terminal 1 is manufactured by the manufacturing method similar to that of the embodiment, it is possible to perform positional adjustment of the short wavelength laser easily as compared to the configuration in which the laser beam is applied so as to obliquely intersect the axis of the wire material 100.

Moreover, in general, the absorption rate of the laser beam with respect to metal changes depending on the wavelength of the laser beam and the type of the metal, but the laser beam of the short wavelength laser has an absorption rate with respect to copper that is significantly higher than that of the laser beam of the infrared laser. Accordingly, when the wire material 100 is a wire material mainly containing copper, the use of the short wavelength laser allows the end portion 100a of the wire material 100 to be appropriately melted.

### (Third Modification Example)

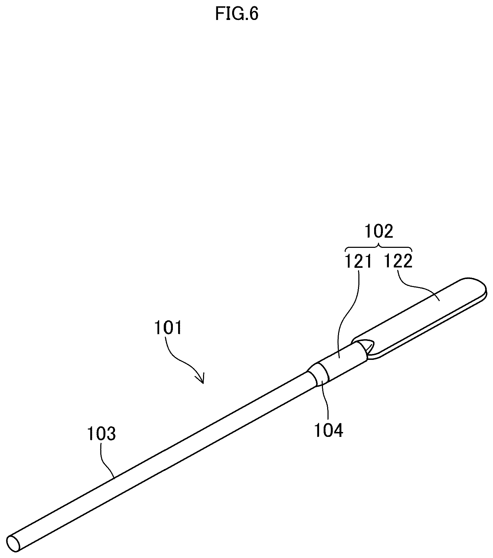

Next, a lead terminal for a power storage device according to a third modification example of the present invention and a method of manufacturing the same are described with reference to FIG. 6 to FIG. 8C by means of an example of a lead terminal for an electrolytic capacitor. The lead terminal of the third modification example is different from the lead terminals 1 of the embodiment and the first and second modification examples in that the wire diameter ratio (to be described later) of the lead wire to the wire material is relatively large.

As illustrated in FIG. 6, a lead terminal 101 according to this modification example includes an electrode terminal 102 made of aluminum and a lead wire 103 formed of a CP wire. The electrode terminal 102 includes a rod-shaped portion 121 on one end side and a rolled portion 122 on another end side. The lead wire 103 is connected to one end of the rod-shaped portion 121 through intermediation of a welded portion 104. The diameter of the wire material (aluminum wire) (that is, the diameter of the rod-shaped portion 121) is, for example, 1.2 mm, and the diameter of the lead wire 103 is, for example, 1.0 mm. In the following, a ratio of the diameter of the lead wire to the diameter of the wire material (that is, the diameter of the rod-shaped portion) is referred to as "wire diameter ratio of lead wire to wire material" or "wire diameter ratio of lead terminal." The wire diameter ratio is calculated as an integer value by rounding the decimal part. The upper limit value of the wire diameter ratio is 100%. In the above-mentioned example, the wire diameter ratio of the lead terminal 101 is 1.0/1.2=83%, and is larger than the wire diameter ratio of the lead terminal 1 according to each of the embodiment and the first and second modification examples of 40% (=0.8/2). The lead terminal according to this modification example has a feature in that the wire diameter ratio falls within a range of 83% or more and 100% or less. That is, as long as the wire diameter ratio of the lead terminal 101 falls within this range, the diameters of the wire material and the lead wire 103 are not limited to the above-mentioned values.

The lead terminal 101 may be manufactured through use of the wire material and the lead wire 103 that have the wire diameter ratio of 83% or more and 100% or less in the first step of the embodiment. Further, the lead terminal 1 may be manufactured even by the manufacturing method of the first modification example.

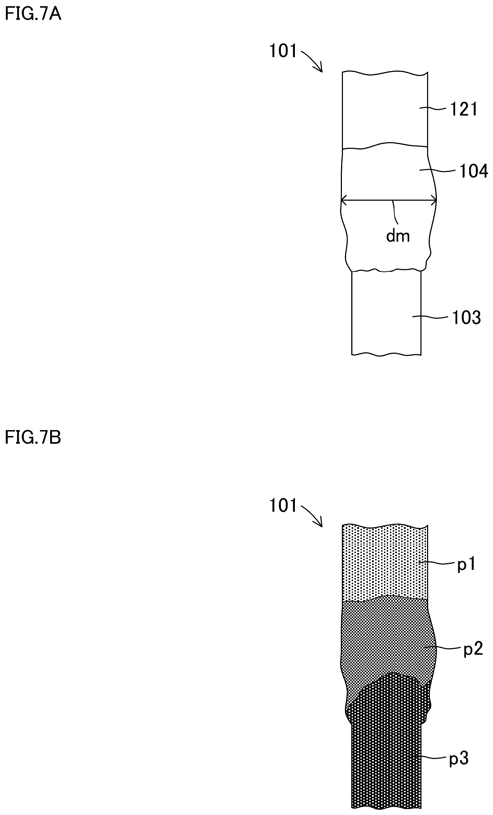

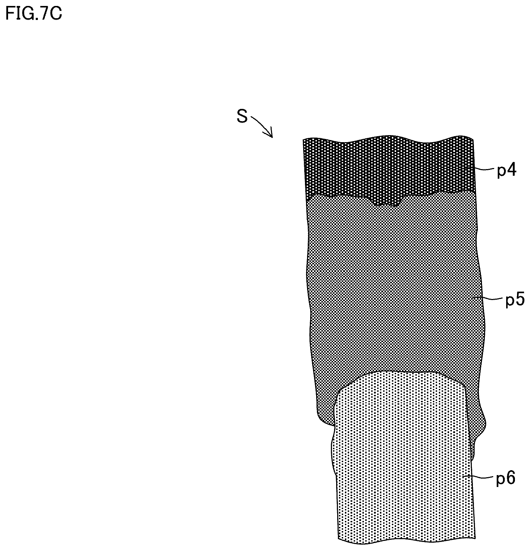

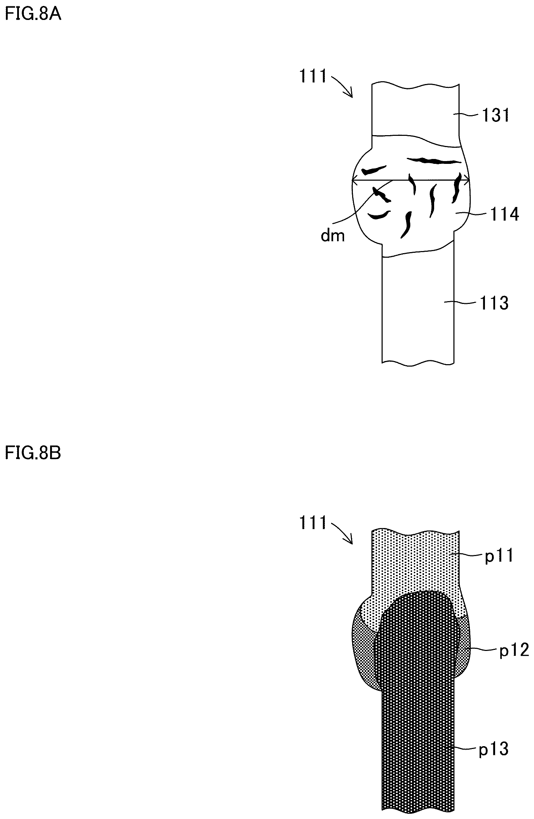

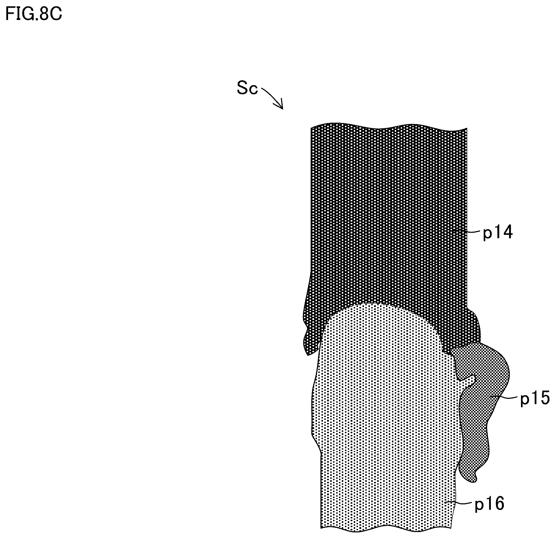

FIG. 7A is a view for illustrating the welded portion 104 of the lead terminal 101 and the vicinity thereof. The rod-shaped portion 121 has a diameter of 1.2 mm, and the lead wire 103 has a diameter of 1.0 mm. FIG. 7B is a schematic view of an X-ray image of FIG. 7A. FIG. 7C is a schematic view of an electron probe micro analyzer (EPMA) image in a cross section including an axis of a sample S. The sample S is manufactured by laser welding (strictly speaking, the manufacturing method according to the embodiment) through use of a material having the same dimensions as those of the lead terminal 101. Meanwhile, FIG. 8A is a view for illustrating a welded portion 114 of a lead terminal 111 and the vicinity thereof as a comparative example manufactured by arc welding. A rod-shaped portion 131 has a diameter of 1.2 mm, and a lead wire 113 has a diameter of 1.0 mm. FIG. 8B is a schematic view of an X-ray image of FIG. 8A. FIG. 8C is a schematic view of an EPMA image in a cross section including an axis of a sample Sc. The sample Sc is manufactured by arc welding through use of a material having the same dimensions as those of the lead terminal 111.

When FIG. 7A and FIG. 8A are compared to each other, in FIG. 7A, the surface of the welded portion 104 of the lead terminal 101 is relatively smooth, but, in FIG. 8A, the surface of the welded portion 114 of the lead terminal 111 has a large number of recesses and protrusions. Further, the welded portion 104 partially has a slight bulge, but its shape is substantially symmetrical about the axis. In contrast, the welded portion 114 greatly protrudes in the radial direction, and its shape is asymmetrical about the axis. In general, when the electrolytic capacitor is manufactured through use of a lead terminal having a shape of a welded portion that is asymmetrical about the axis, a gap is generated between a sealing body and the lead terminal, and the electrolytic solution may leak from the gap. In this case, there is a possibility that the quality characteristic of the electrolytic capacitor is reduced.

In view of the above, in this modification example, an upper limit value dmu is provided for a maximum diameter dm of the welded portion, and only a lead terminal satisfying dm<dmu is regarded as a non-defective product. The upper limit value dmu is a value at a level that can sufficiently suppress leakage of the electrolytic solution, and may be set to, for example, "(diameter of wire material)+0.100 mm" (dmu=(diameter of wire material)+0.100 mm). In the examples of FIG. 7A and FIG. 8A, the maximum diameter dm of the welded portion 104 is less than the upper limit value dmu, but the maximum diameter dm of the welded portion 114 greatly exceeds the upper limit value dmu. Accordingly, when the electrolytic capacitor is manufactured through use of the lead terminal having the wire diameter ratio of 83%, the leakage of the electrolytic solution can be appropriately suppressed in laser welding, but, in arc welding, there is a possibility that reduction in quality characteristic of the electrolytic capacitor is caused due to leakage of the electrolytic solution.

It is considered that the shape of the welded portion can be more finely adjusted in the lead terminal 101 than in the lead terminal 111 because of a difference in the welding method. That is, in laser welding, with the environmental condition at the time of irradiation being set in advance to a condition matching the wire diameter ratio, the shape of the welded portion 104 can be appropriately controlled regardless of the value of the wire diameter ratio. In contrast, in arc welding, as the wire diameter ratio is increased (in other words, as a wire diameter difference between the wire material and the lead wire 113 is reduced), it becomes difficult to melt the lead wire 113 formed of the CP wire. Accordingly, a distal end of the lead wire 113 that is not sufficiently melted is forcefully inserted into the molten pool formed at the end portion of the wire material, and thus the molten pool is pushed out in the radial direction while being mixed with a small amount of molten metal at the distal end of the lead wire 113. It is considered that, as a result, the welded portion 114 is shaped to greatly protrude in the radial direction.

Further, as another cause to reduce the quality characteristic of the electrolytic capacitor, a bending strength of the welded portion of the lead terminal can be given. The bending strength is an index indicating the strength of the welded portion, and is represented by a cycle number "n" required until the lead wire is broken when an operation in which, after the lead wire is bent by 90° to one side with respect to the wire material and returned, the lead wire is bent by 90° to another side (direction on the side opposite to the one side) and returned is regarded as one cycle. For example, when the lead wire is broken after two cycles, n=2 is satisfied. As the cycle number "n" becomes larger, the strength of the welded portion becomes higher. When the lead wire is broken while the lead wire is bent by 90° to one side with respect to the wire material and returned, the cycle number "n" is defined as "(cycle number so far)+0.5." When the electrolytic capacitor is manufactured through use of a lead terminal having a low bending strength, the lead terminal may be broken due to vibrations or a slight impact during usage. In this case, there is a possibility that the quality characteristic of the electrolytic capacitor is reduced.

In view of the above, in this modification example, a lower limit value nl is provided for the cycle number "n", and only a lead terminal satisfying n≥nl is regarded as a non-defective product. The lower limit value nl is a value at a level that can sufficiently suppress breakage of the lead terminal due to vibrations or a slight impact, and may be set to, for example, 1.0 cycle in the dimensional standard of this modification example. As a result of performing a bending strength test on the lead terminals 101 and 111, the cycle number "n" of the lead terminal 101 was 1.5 cycles, which satisfied n≥nl, but the cycle number "n" of the lead terminal 111 was 0.5 cycle, which was n<nl. Accordingly, when the electrolytic capacitor is manufactured through use of the lead terminal having the wire diameter ratio of 83%, the breakage of the lead terminal can be appropriately suppressed in laser welding, but, in arc welding, there is a possibility that the reduction in quality characteristic of the electrolytic capacitor is caused due to the breakage of the lead terminal.

It is considered that the bending strength is higher in the lead terminal 101 than in the lead terminal 111 because of the difference in composition between the welded portion 104 and the welded portion 114. Now, description is given with reference to FIG. 7B, FIG. 7C, FIG. 8B, and FIG. 8C. In FIG. 7B, a part p1 corresponds to the rod-shaped portion 121, a part p2 and an upper end portion of a part p3 correspond to the welded portion 104, and the remaining portion of the part p3 corresponds to the lead wire 103. A large part of the welded portion 104 is occupied by the part p2. The shade of color of the parts p1 to p3 is caused by a transmission amount of X rays. The part p1 has a color derived from the main component (aluminum) of the wire material, and the part p3 has a color derived from the main component (iron) of the lead wire 103. The part p2 has an intermediate color between the two parts, and hence it is considered that, at the part p2, aluminum and iron (strictly speaking, in addition to iron, a minute amount of copper and tin) are melted and solidified.

This fact is also supported by FIG. 7C. That is, in FIG. 7C, a part p4 corresponds to the rod-shaped portion 121, a part p5 and an upper end portion of a part p6 correspond to the welded portion 104, and the remaining portion of the part p6 corresponds to the lead wire 103. A large part of the welded portion 104 is occupied by the part p5. The shade of color of the parts p4 to p6 is caused by the type and the density of the element. The part p4 has a color derived from the main component (aluminum) of the wire material, and the part p6 has a color derived from the main component (iron) of the lead wire 103. The part p5 has an intermediate color between the two parts similarly to the part p2. As described above, it is understood that, in the welded portion 104, a large part thereof has a composition in which aluminum and iron (strictly speaking, in addition to iron, a minute amount of copper and tin) are melted and mixed and then solidified. In the following, such a composition is referred to as "mixed composition."

Meanwhile, in FIG. 8B, a part excluding a lower end portion in a part p11 corresponds to the rod-shaped portion 131, the lower end portion of the part p11, a part p12, and an upper end portion of a part p13 (in other words, a part covered with the parts p11 and p12 in the part p13) correspond to the welded portion 114, and the remaining portion of the part p13 corresponds to the lead wire 113. A large part of the welded portion 114 is occupied by the part p13. The part p11 has a color derived from the main component (aluminum) of the wire material, and the part p13 has a color derived from the main component (iron) of the lead wire 103. The part p12 has an intermediate color between the two parts, and hence it is considered that, at the part p12, aluminum and iron (strictly speaking, in addition to iron, a minute amount of copper and tin) are melted and solidified.

This fact is also supported by FIG. 8C. That is, in FIG. 8C, a part excluding a lower end portion in a part p14 corresponds to the rod-shaped portion 131, the lower end portion of the part p14, a part p15, and an upper end portion of a part p16 (in other words, a part covered with the parts p14 and p15 in the part p16) correspond to the welded portion 114, and the remaining portion of the part p16 corresponds to the lead wire 113. A large part of the welded portion 114 is occupied by the part p16. The part p14 has a color derived from the main component (aluminum) of the wire material, and the part p16 has a color derived from the main component (iron) of the lead wire 113. The part p15 has an intermediate color between the two parts similarly to the part p12. As described above, it is understood that, at the welded portion 114, a large part thereof has an iron composition, and, in the welded portion 114, a boundary between dissimilar metals (iron and aluminum) is formed between the parts p13 and p11 (or between the parts p16 and p14). In addition, it is understood that the mixed composition is formed only in an outer peripheral part in the welded portion 114.

As described above, in the welded portion 104, a large part thereof has a mixed composition of aluminum and iron. Accordingly, when a bending load is applied to the lead terminal 101, the welded portion 104 serves as a buffering material so that a stress is less liable to concentrate at the welded portion 104. It is considered that the bending strength is increased as a result. In contrast, in the welded portion 114, a large part thereof has an iron composition, and, in the welded portion 114, a boundary between dissimilar metals (iron and aluminum) is formed. Accordingly, when a bending load is applied to the lead terminal 111, a stress concentrates at the welded portion 114 due to the difference in physical properties (typically, hardness and ease of bending) between iron and aluminum. In particular, in the example of FIG. 8A to FIG. 8C, the wire diameter ratio is relatively large (in other words, the wire diameter difference between the wire material and the lead wire 113 is small), and hence an area of the boundary between iron and aluminum is increased, and a large stress concentrates accordingly. It is considered that the bending strength is reduced as a result.

The inventors of the present application have manufactured, by each of laser welding and arc welding, seven samples (samples 1 to 7) of lead terminals having different wire diameter ratios in order to verify superiority of laser welding, to arc welding from the viewpoint of the wire diameter ratio, and have performed a test of investigating the quality. Table 1 below shows test results of the samples 1 to 7 of the lead terminals in which the wire material is an aluminum wire and the lead wire is a CP wire.

**Table 1**

| Sample No. | 1 | 2 | 3 | 4 | 5 | 6 | 7 |
|---|---|---|---|---|---|---|---|
| Wire material diameter (mm) | 1.2 | 2.5 | 0.85 | 0.7 | 1.2 | 1.2 | 1.0 |
| Lead wire diameter (mm) | 0.4 | 1.0 | 0.45 | 0.4 | 0.8 | 1.0 | 1.0 |
| Wire diameter ratio | 33% | 40% | 53% | 57% | 67% | 83% | 100% |
| Laser welding | ○ | ○ | ○ | ○ | ○ | ○ | ○ |
| Arc welding | ○ | ○ | ○ | ○ | ○ | × | × |

In this test, the quality of the lead terminal was evaluated as satisfactory (∘) when the maximum diameter dm of the welded portion satisfied dm<dmu and the cycle number "n" of the bending strength test satisfied n≥nl, and the quality of the lead terminal was evaluated as defective (×) when dm≥dmu or n<nl was satisfied. The upper limit value dmu is "(diameter of wire material)+0.100 mm" regardless of the wire diameter ratio. Meanwhile, the lower limit value nl is set to a predetermined value for each dimensional standard of the lead terminal. For example, when the wire diameter ratio is 33%, nl=1.5 may be set. When the wire diameter ratio is 40%, nl=2.0 may be set. When the wire diameter ratio is 53%, nl=2.0 may be set. When the wire diameter ratio is 57%, nl=1.5 may be set. When the wire diameter ratio is 67%, nl=1.0 may be set. When the wire diameter ratio is 83%, nl=1.0 may be set. When the wire diameter ratio is 100%, nl=1.0 may be set. A CP wire of a different type (for example, a CP wire having a different thickness of the copper plating layer) may be used depending on the dimensional standard of the lead terminal.

In laser welding, the quality is satisfactory in all of the samples 1 to 7. In contrast, in arc welding, the quality is satisfactory in the samples 1 to 5, but the quality is defective in the samples 6 and 7.

It is considered that the quality of the lead terminal manufactured by laser welding is satisfactory in all of the samples 1 to 7 for the following two reasons. That is, the first reason is because, in laser welding, with the environmental condition at the time of irradiation being set in advance to a condition matching the wire diameter ratio, the shape of the welded portion can be appropriately controlled regardless of the value of the wire diameter ratio. The second reason is because, in laser welding, a large part of the welded portion has a mixed composition, and hence a stress is less liable to concentrate at the welded portion so that a high bending strength can be achieved.

In contrast, it is considered that the quality of the lead terminal manufactured by arc welding is defective in the samples 6 and 7 for the following two reasons. That is, the first reason is because, in arc welding, as the wire diameter ratio becomes larger, the lead wire formed of the CP wire is less liable to be melted, and hence, in the lead terminal having the wire diameter ratio of 83% or more, a distal end of the lead wire that is not sufficiently melted is forcefully inserted into the molten pool formed at the end portion of the wire material, and thus the welded portion is shaped to greatly protrude in the radial direction. The second reason is because, in arc welding, a large part of the welded portion has an iron composition, and, in the lead terminal having the wire diameter ratio of 83% or more, the area of the boundary between dissimilar metals (iron and aluminum) in the welded portion is increased. Accordingly, when a bending load is applied to the lead terminal, a large stress easily concentrates at the welded portion, and the bending strength of the lead terminal is reduced.

It is considered that the quality of the lead terminal manufactured by arc welding is satisfactory in the samples 1 to 5 for the following two reasons. That is, the first reason is because, in the lead terminal having the wire diameter ratio of 67% or less, the lead wire formed of the CP wire is sufficiently melted even by arc welding, and hence a situation in which the welded portion greatly protrudes in the radial direction is less liable to occur even when the distal end of the lead wire is forcefully inserted into the molten pool formed at the end portion of the wire material. The second reason is because, in the lead terminal having the wire diameter ratio of 67% or less, the area of the boundary between the dissimilar metals in the welded portion is relatively small, and hence a stress does not concentrate at the welded portion so much even when a bending load is applied to the lead terminal.

According to Table 1, the quality of the lead terminal related to laser welding can be ensured regardless of the value of the wire diameter ratio. However, in this modification example, the lead terminal having the wire diameter ratio of 83% or more and 100% or less is considered as the subject matter of the invention. This is because, along with progresses in automotive industries, computer industries, and the like in recent years, the applications of the electrolytic capacitor are expected to further expand into various fields. As a result, there are demands for development in a lead terminal having a relatively large wire diameter ratio as one lead terminal having various dimensional standards. Almost all related-art lead terminals are manufactured by arc welding, but, as is clear from Table 1, it has been difficult to ensure the quality by arc welding when the wire diameter ratio is relatively large. In contrast, the lead terminal according to this modification example is manufactured by laser welding, and hence the quality thereof can be appropriately ensured even for the lead terminal having the wire diameter ratio for which the quality has not been able to be ensured by arc welding (that is, from 83% to 100%).

In addition, with the wire diameter ratio being large, when the diameter of the wire material 100 is equivalent to that of the related art, a lead wire thicker than in the related art can be used as the lead wire 103. When the diameter of the lead wire 103 becomes larger, the thickness of the copper plating layer becomes larger accordingly. Copper is mainly responsible for the conductivity of the lead wire 103, and hence, with this configuration, the electrical resistance of the lead terminal 101 can be reduced so that the electrical characteristic of the electrolytic capacitor can be improved.

Further, the lead terminal 101 may be manufactured by the manufacturing method according to the second modification example. That is, a wire material mainly containing copper may be used as the wire material 100 in place of the aluminum wire. Even in this case, results similar to those of Table 1 were obtained.

Moreover, a metal wire mainly containing copper (hereinafter also referred to as "copper lead wire") may be used as the lead wire 103 in place of the CP wire. In this case, the phrase "metal wire mainly containing copper" means a metal wire obtained by covering an outer peripheral surface of a copper wire with a tin plating layer or a silver plating layer. In this case, the lead terminal 101 includes two types, specifically, "a lead terminal in which the wire material 100 is an aluminum wire and the lead wire 103 is a copper lead wire" and "a lead terminal in which the wire material 100 is a wire material mainly containing copper and the lead wire 103 is a copper lead wire." Results similar to those of Table 1 were obtained even in the lead terminals 101 of both types.

As described above, according to the method of manufacturing the lead terminal 101 and the lead terminal 101 of the third modification example, it is possible to provide a manufacturing method of appropriately manufacturing the lead terminal 101 including the electrode terminal 102 formed of the wire material 100 mainly containing aluminum or copper, and the lead terminal 101 manufactured by the manufacturing method. The lead terminal 101 may be used not only in the electrolytic capacitor but also as a component of other power storage devices. Examples of other power storage devices include a lithium ion capacitor, an electric double layer capacitor, and a lithium ion battery. Similar effects are produced even when the lead terminal 101 is used as a component of other power storage devices.

In the above, the embodiment and the first to third modification examples have been described, but the present invention is not limited to the above-mentioned embodiment and modification examples. Various changes are possible within the range not departing from the object of the present invention.

For example, similarly to the third modification example, also in the embodiment and the first and second modification examples, the type of the lead wire is not limited to the CP wire. The lead wire may be formed of, for example, a copper lead wire (metal wire mainly containing copper). When the copper lead wire is used in the second modification example (that is, when main metal materials of the wire material 100 and the lead wire 3 are both copper), the following actions and effects can be obtained in addition to the above-mentioned actions and effects. That is, there has been a problem in that, in the case in which the main metal materials of the wire material 100 and the lead wire 3 are both copper, when an attempt is made to melt the wire material 100 by arc welding, the lead wire 3 is excessively melted and hence the wire material 100 and the lead wire 3 cannot be appropriately connected to each other (in other words, the welded portion 4 cannot be appropriately formed). Meanwhile, when the discharge amount is suppressed in order to appropriately melt the lead wire 3, the wire material 100 is not sufficiently melted. Also in this case, there has been a problem in that the wire material 100 and the lead wire 3 cannot be appropriately connected to each other. In contrast, in the manufacturing method according to the second modification example, only the end portion 100a of the wire material 100 is melted by laser welding, and the lead wire 3 is melted by the heat of the molten pool A after being pushed into the molten pool A. The molten pool A of the end portion 100a and the molten copper of the end portion 3a of the lead wire 3 are mixed and solidified so that the welded portion 4 is formed. According to this manufacturing method, it is possible to avoid excessive melting of the lead wire 3 or insufficient melting of the wire material 100, and hence it is possible to appropriately manufacture the lead terminal 101 in which the main metal materials of the wire material 100 and the lead wire 3 are both copper, which has been difficult to manufacture by arc welding. In the welded portion 4, a large part thereof has a solidified structure of copper, and slightly contains an alloy of copper and another metal (for example, tin).

Further, the pushing mechanism may be provided to the jig 200 instead of to the jig 300. That is, the pushing mechanism may be configured to apply, to the wire material 100, an external force of pushing the wire material 100 toward the lead wire 3 at a predetermined speed by a predetermined distance in the axial direction.

Moreover, in the above-mentioned embodiment (and the first to third modification examples), the electrode terminal 2 is formed by subjecting the wire material 100 to pressing after the wire material 100 that is a material for the electrode terminal 2 and the lead wire 3 are welded to each other. Instead, first, the electrode terminal 2 may be formed by subjecting the wire material 100 to pressing, and then the lead wire 3 may be welded to one end of the rod-shaped portion 21 of the electrode terminal 2.

Moreover, in the above-mentioned embodiment and first to third modification examples, as the laser irradiation machine 400, a hybrid laser including an infrared laser and a short wavelength laser in combination may be used.

Moreover, as described in the above-mentioned embodiment, the absorption rate of aluminum is equivalent in all wavelength bands of infrared rays and visible light rays. Accordingly, when an aluminum wire is used as the wire material 100, the laser irradiation machine is not limited to the infrared laser or the short wavelength laser, and other inexpensive laser irradiation machines may be used.

### Reference Signs List

1, 101: lead terminal, 2, 102: electrode terminal, 3, 103: lead wire, 3a: end portion of lead wire, 3b: end surface of lead wire, 3c: outer peripheral surface of lead wire, 4, 104: welded portion, 21, 121: rod-shaped portion, 22, 122: rolled portion, 100: wire material, 100a: end portion of wire material, 100b: end surface of wire material, 100c: outer peripheral surface of wire material, 200: jig, 300: jig, 400: laser irradiation machine

## Claims

1. A method of manufacturing a lead terminal for a power storage device, the lead terminal including: an electrode terminal formed of a wire material mainly containing aluminum or copper; and a lead wire connected to the electrode terminal through intermediation of a welded portion, the method comprising:
a first step of aligning the wire material and the lead wire in a straight line, and holding the wire material and the lead wire under a state in which a distance between an end surface of the wire material on the lead wire side and an end surface of the lead wire on the wire material side is maintained at a predetermined distance;
a second step of applying, by a laser irradiation machine, a laser beam to an end portion of the wire material on the lead wire side to melt the end portion; and
a third step of pushing one of the wire material or the lead wire toward another one of the wire material or the lead wire in an axial direction after an elapse of a predetermined time from a time point of start of irradiation with the laser beam in the second step to form the welded portion.

2. The method of manufacturing a lead terminal according to claim 1, wherein, in the first step, a CP wire or a metal wire mainly containing copper is used as the lead wire.

3. The method of manufacturing a lead terminal according to claim 1, wherein, in the second step, the laser beam is applied to an outer peripheral surface of the end portion of the wire material from a direction orthogonal to the axial direction.

4. The method of manufacturing a lead terminal according to claim 3, wherein, in the second step, the laser beam is applied to a predetermined position on the outer peripheral surface of the wire material.

5. The method of manufacturing a lead terminal according to claim 3,
wherein, in the first step, a wire material mainly containing aluminum is used for the electrode terminal, and
wherein the predetermined time in the third step is an irradiation time of the laser beam.

6. The method of manufacturing a lead terminal according to claim 4,
wherein, in the first step, a wire material mainly containing aluminum is used for the electrode terminal, and
wherein the predetermined time in the third step is an irradiation time of the laser beam.

7. The method of manufacturing a lead terminal according to claim 1, wherein, in the second step, the laser beam is applied to an end surface of the end portion of the wire material from a direction obliquely intersecting the axial direction.

8. The method of manufacturing a lead terminal according to claim 7,
wherein, in the first step, a wire material mainly containing aluminum is used for the electrode terminal, and
wherein the predetermined time in the third step is an irradiation time of the laser beam.

9. The method of manufacturing a lead terminal according to any one of claims 1 to 8,
wherein, in the first step, a wire material mainly containing aluminum is used for the electrode terminal, and
wherein the laser irradiation machine is an infrared laser.

10. The method of manufacturing a lead terminal according to any one of claims 1 to 4 and 7,
wherein, in the first step, a wire material mainly containing copper is used for the electrode terminal, and
wherein the laser irradiation machine is a short wavelength laser or a hybrid laser.

11. The method of manufacturing a lead terminal according to any one of claims 1 to 8, wherein, in the first step, as the wire material and the lead wire, a wire material and a lead wire that have a wire diameter ratio of the lead wire to the wire material of 83% or more and 100% or less are used.

12. A lead terminal for a power storage device, the lead terminal comprising:
an electrode terminal formed of a wire material mainly containing aluminum or copper; and
a lead wire connected to the electrode terminal through intermediation of a welded portion,
wherein a wire diameter ratio of the lead wire to the wire material is 83% or more and 100% or less.

13. The lead terminal according to claim 12, wherein the lead wire is a CP wire or a metal wire mainly containing copper.
